# FASCICULE DE BREVET EUROPEEN

(11) **EP 3 812 199 B1**
(45) Date de publication et mention de la délivrance du brevet: **11.10.2023**
(21) Numéro de dépôt: 20203611.7
(22) Date de dépôt: 23.10.2020
(51) Int. Cl.: B60L 53/302, H01B 7/42

(54) **CÂBLE À DISSIPATION THERMIQUE AMÉLIORÉE**
KABEL MIT VERBESSERTER WÄRMEABLEITUNG
CABLE WITH IMPROVED HEAT DISSIPATION

(30) Priorité: 25.10.2019 FR 1911973; 25.10.2019 FR 1911969
(43) Date de publication de la demande: 28.04.2021
(73) Titulaire: ACOME, 75014 Paris (FR)
(72) Inventeur: AIT AMEUR, Mehdi, 50140 ROMAGNY (FR); MAGDELAINE, Christian, 35133 PARIGNE (FR); LALLINEC, Patrice, 50610 JULLOUVILLE (FR)
(74) Mandataire: Regimbeau

(56) Documents cités:
- EP-A1- 0 312 446
- EP-A1- 0 715 391
- DE-A1-102010 007 975
- DE-A1-102017 217 506
- JP-A- 2000 133 058
- US-A1- 2009 167 078
- US-A1- 2014 265 655
- US-A1- 2019 140 525
- Anonymous: "Why is the surface area of a hollow conductor more than that of a solid conductor for the same current carrying capacity? - Quora", , 3 septembre 2014 (2014-09-03), XP055710143, Extrait de l'Internet: URL:https://www.quora.com/Why-is-the-surfa ce-area-of-a-hollow-conductor-more-than-th at-of-a-solid-conductor-for-the-same-curre nt-carrying-capacity [extrait le 2020-06-30]

## Description

### DOMAINE TECHNIQUE GENERAL

L'invention concerne le domaine des câbles pour véhicule utilisés pour le câblage interne des véhicules par exemple pour la charge des véhicules hybrides ou électriques.

### ETAT DE LA TECHNIQUE

Les véhicules utilisent un grand nombre de câbles pour le câblage de plusieurs équipements électriques. Les câbles sont aussi utilisés pour la charge des véhicules hybrides ou électriques ou bien sont utilisés dans les installations de chauffage et de climatisation ou encore d'entrainement de moteur électrique.

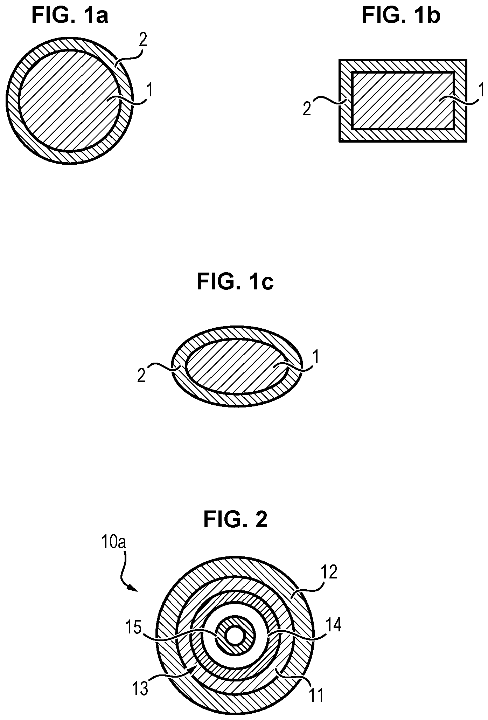

Comme illustré sur la **figure 1a** ou la **figure 1b** ou la **figure 1c** de tels câbles sont habituellement constitués d'un conducteur électrique 1 entouré d'une couche isolante 2. En outre, les câbles présentent des sections qui peuvent présenter plusieurs formes outre circulaire ou rectangulaire comme illustré sur ces figures ou encore ovoïde. Également, les câbles peuvent être entourés d'une tresse métallique ou hybride et d'une couche isolante. Ces structures de câble sont particulièrement utilisées dans le cas où l'on veut éviter toute perturbation électromagnétique.

Lorsque ces câbles supportent un fort courant électrique, on observe un échauffement important du câble et des connecteurs électriques.

Un tel échauffement est problématique car il peut endommager le câble lui-même (en particulier la couche isolante), les connecteurs ou encore les équipements.

Pour limiter l'échauffement du câble et du connecteur électrique on peut mettre en oeuvre une solution de dissipation thermique passive qui est une dissipation thermique par convection naturelle et par rayonnement thermique vers le milieu extérieur du câble.

L'augmentation de la surface d'échange extérieure du câble induite par l'augmentation de l'épaisseur de la couche isolante permet une amélioration de la dissipation thermique du câble.

Or l'augmentation de l'épaisseur de la couche isolante génère une résistance thermique de conduction supplémentaire qui s'oppose au refroidissement du câble. Aussi cela augmente le poids et le coût du câble et rend difficile la manipulation pour le câblage des équipements.

Également on peut augmenter la section du conducteur électrique. Or cela n'est pas souhaitable car cela augmente également le coût, le poids et nuit à la manipulation du câble.

Les document EP 0 715 391 A1 et DE 2017 217506 A1 décrivent un câble a dissipation thermique active mais dont l'intégration du circuit de refroidissement n'est pas optimale.

### PRESENTATION DE L'INVENTION

L'invention propose de pallier au moins un de ces inconvénients.

Selon un premier aspect, l'invention propose d'améliorer la dissipation thermique des câbles de manière active.

A ce titre, l'invention propose un câble pour véhicule selon la revendication 1.

L'invention, selon le premier aspect, est avantageusement complétée par les caractéristiques suivantes, prises seules ou en une quelconque de leur combinaison techniquement possible :
- le câble comprend des moyens d'écartement de la première conduite avec la deuxième conduite, lesdits moyens d'écartement étant disposés entre la première conduite et la deuxième conduite ;
- le moyen d'écartement est constitué par une cale de section circulaire enroulée en hélice autour de la deuxième conduite, ladite cale étant maintenue en force entre les premières et deuxièmes conduites ;
- le moyen d'écartement est formé par des ailettes fixées à la première conduite et/ou la deuxième conduite ;
- le câble comprend un raccord hydraulique d'introduction du fluide et un raccord hydraulique de sortie du fluide disposés à l'extrémité externe du circuit de refroidissement, ledit raccord hydraulique d'introduction du fluide étant connecté à la première conduite, ledit raccord hydraulique de sortie du fluide étant connecté à la deuxième conduite, les raccords d'introduction et de sortie du fluide étant agencés l'un par rapport à l'autre pour isoler le circuit aller et le circuit de retour à l'extrémité externe du circuit de refroidissement ;
- le câble comprend un raccord hydraulique terminal disposé à l'extrémité interne du circuit de refroidissement pour permettre de boucler la première conduite avec la deuxième conduite ;
- le câble comprend un raccord hydraulique d'introduction du fluide et un raccord hydraulique de sortie du fluide disposés à l'extrémité externe du circuit de refroidissement, ledit raccord hydraulique d'introduction du fluide étant connecté à la première conduite, ledit raccord hydraulique de sortie du fluide étant connecté à la deuxième conduite ;
- le conducteur électrique présente une section de forme rectangulaire ou ovoïde ou oblongue ;
- le câble comprend des moyens de connexions électriques connectés de part et d'autre du conducteur électrique, lesdits moyens permettant de connecter électriquement ledit câble ;
- le conducteur électrique présente une section creuse dans laquelle est logée le circuit de refroidissement, le câble présentant un diamètre supérieur à celui d'un câble dit de référence ayant un conducteur électrique de référence plein ayant une section pleine dite de référence identique à la section du conducteur électrique de section creuse.

Le câble selon le premier aspect de l'invention est donc refroidi de manière active grâce à la circulation interne d'un fluide. La performance du câble selon ce premier aspect est définie par le coefficient d'échange thermique superficiel obtenu avec un câble avec circuit de refroidissement.

Selon un deuxième aspect, il est possible d'améliorer la dissipation thermique des câbles de manière passive.

A ce titre, on décrit ici un câble à dissipation thermique passive, pour véhicule, comprenant un conducteur électrique et une couche isolante entourant le conducteur électrique, caractérisé en ce que le conducteur électrique présentant une section creuse comprend un coeur en son centre en contact avec la surface interne de ce conducteur électrique, le câble présentant une section supérieure à celui d'un câble dit de référence ayant un conducteur électrique de référence plein ayant une section pleine dite de référence identique à la section du conducteur électrique de section creuse.

Le câble selon le deuxième aspect est avantageusement complétée par les caractéristiques suivantes, prises seules ou en une quelconque de leur combinaison techniquement possible :
- le coeur du câble est adapté pour permettre un contact entre le conducteur électrique et la couche isolante ;
- le conducteur électrique présente une section circulaire ou rectangulaire ou oblongue ou ovoïde ;
- le coeur du câble est constitué d'un matériau expansé, isolant électriquement ou conducteur électriquement ou de mélange de ces matériaux.
- le coeur du câble présente une forme choisie parmi le groupe suivant : en forme de tube, en forme de jonc, en forme de ressort ;
- le coeur du câble est de l'air et le conducteur électrique est constitué par une conduite ou un tube rigide conductrice électriquement ;

Le câble selon le deuxième aspect de l'invention appartient avantageusement à un dispositif d'alimentation électrique pour véhicule et qui comprend un connecteur électrique à chacune de ses extrémités ;
Le dispositif d'alimentation électrique est avantageusement destiné à être connecté à au moins deux équipements électriques ;
Le dispositif d'alimentation électrique est avantageusement destiné à être connecté aux bornes d'une batterie d'un véhicule hybride ou électrique d'une part et au connecteur d'autre part ;
Ainsi, on obtient un câble dont la dissipation thermique passive est améliorée puisque la surface d'échange externe du câble est augmentée par rapport à un câble de référence.

En effet, l'augmentation de la surface d'échange externe du câble est obtenue en augmentant le diamètre de la couche isolante et en ayant un conducteur électrique creux. En effet, la surface utile d'échange thermique par convection naturelle est augmentée sans nécessiter d'augmenter l'épaisseur de la couche isolante et donc de la résistance thermique de conduction.

Selon un troisième aspect, il est possible d'améliorer la dissipation thermique en combinant la dissipation thermique active et passive telles que définies selon les premiers et deuxièmes aspects.

A ce titre, il est décrit un câble pour véhicule, comprenant un conducteur électrique et une couche isolante entourant le conducteur électrique, caractérisé en ce que le câble comprend un circuit de refroidissement agencé à l'intérieur dudit conducteur électrique, ledit circuit de refroidissement comprenant une première conduite et une deuxième conduite disposées à l'intérieur dudit conducteur électrique de manière à former un circuit de refroidissement dans lequel circule un fluide à l'intérieur du conducteur électrique, les premières et deuxièmes conduites comprennent des entrées et sorties de fluide, la première conduite formant un circuit aller pour le fluide et la deuxième conduite formant un circuit retour pour le fluide au sein du circuit de refroidissement, la deuxième conduite étant disposée à l'intérieur de la première conduite, le câble étant tel que le conducteur électrique présente une section creuse dans laquelle est logée le circuit de refroidissement, le câble présentant un diamètre supérieur à celui d'un câble dit de référence ayant un conducteur électrique de référence plein ayant une section pleine dite de référence identique à la section du conducteur électrique de section creuse.

Ainsi, le refroidissement actif peut se combiner à un refroidissement passif du câble obtenu en augmentant le diamètre du câble, la dissipation thermique n'en est qu'améliorée. En effet, l'augmentation de la surface interne du conducteur électrique permet une augmentation du transfert de chaleur actif au même titre que l'augmentation du transfert de chaleur passif de la surface extérieure du câble elle aussi augmentée.

Selon un quatrième aspect on décrit un dispositif d'alimentation électrique pour véhicule électrique ou hybride comprenant un câble selon le premier aspect ou le deuxième aspect ou le troisième aspect, ledit câble est destiné à être connecté aux bornes d'une batterie d'un véhicule hybride ou électrique d'une part et au connecteur d'autre part.

Également, et de manière complémentaire, le câble selon l'un des aspects ci-dessus peut être entouré d'une tresse métallique ou hybride et d'une couche isolante. Ces structures de câble sont particulièrement utilisées dans le cas où l'on veut éviter toute perturbation électromagnétique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels, outre les figures 1a, 1b et 1c déjà discutées :
- les figures 2 à 5 illustrent un câble selon l'invention ;
- les figures 6a à 6i et 7 illustrent un câble selon le deuxième aspect de l'invention ;
- la figure 8 illustre un câble selon le troisième aspect de l'invention ;
- la figure 9 illustre un cas d'utilisation préféré d'un câble selon l'invention.

Sur l'ensemble des figures les éléments similaires portent des références identiques.

### DESCRIPTION DETAILLEE

### Dissipation active

La **figure 2** illustre un câble pour véhicule comprenant un conducteur électrique 11 et une couche isolante 12 entourant le conducteur électrique 11. On précise ici que l'on entend par conducteur électrique 11 un ensemble de torons, chacun constitué de brins de cuivre, torsadés entre eux. Le conducteur électrique est donc par construction souple et peut épouser diverses formes. Le câble peut en outre présenter plusieurs sections : rectangulaire ou ovoïde ou encore circulaire. Nous y reviendrons.

Afin de limiter l'échauffement du câble, ce dernier comprend un circuit de refroidissement 13 agencé à l'intérieur du conducteur électrique 11. Le circuit de refroidissement 13 comprend une première conduite 14 et une deuxième conduite 15 disposée à l'intérieur du conducteur électrique de manière à former un circuit de circulation d'un fluide à l'intérieur du conducteur électrique 11. Les conduites présentent de préférence une section circulaire mais peuvent présenter d'autres formes.

Le fluide est avantageusement un fluide caloporteur, par exemple : air, eau, eau glycol, fluide frigorifique.

De manière avantageuse, la première conduite 14 forme un circuit aller pour le fluide et la deuxième conduite 15 forme un circuit retour pour le fluide. Le circuit aller s'étend sur une longueur L2 de câble supérieure à la longueur L1 sur laquelle s'étend le circuit retour, le circuit retour étant inclus dans le circuit aller.

La première conduite 14 comprend une entrée E de fluide tandis que la deuxième conduite 15 comprend une sortie S de fluide. L'entrée E de fluide et la sortie S de fluide sont connectées à un circuit intégrant une pompe de circulation et un échangeur thermique (non représentés).

Sur la figure 2, la deuxième conduite 15 est disposée à l'intérieur de la première conduite 14. Ainsi, la première conduite 14 présente un diamètre supérieur au diamètre de la deuxième conduite 15.

En prévoyant que la première conduite 14 à l'intérieur de laquelle est logée la deuxième conduite 15, la première conduite 14 formant un circuit aller pour le fluide et la deuxième conduite 15 formant un circuit retour pour le fluide permet d'avoir une très bonne dissipation thermique puisque les calories sont évacuées par le centre du câble sans contact avec l'élément conducteur à refroidir. En outre, tout étant logé à l'intérieur du centre du câble, l'intégration du circuit est facilitée.

Alternativement, il est possible que le circuit retour soit inclus dans le circuit aller.

De manière complémentaire, on veillera à ce que les diamètres de chacune des conduites permettent une circulation du fluide suffisante pour permettre un refroidissement suffisant. Les premières et deuxièmes conduites sont donc coaxiales.

Lorsque le câble chemine au sein de son environnement de câble il peut présenter des courbes, pour pallier les torsions du câble au cours de son cheminement et donc pour assurer une circulation du fluide en toute circonstance, le câble comprend préférentiellement des moyens d'écartement 16, 17 de la première conduite avec la deuxième conduite. Ces moyens d'écartement 16, 17 sont disposés entre la première conduite 14 et la deuxième conduite 15.

Ces moyens d'écartement 16, 17 peuvent prendre plusieurs formes.

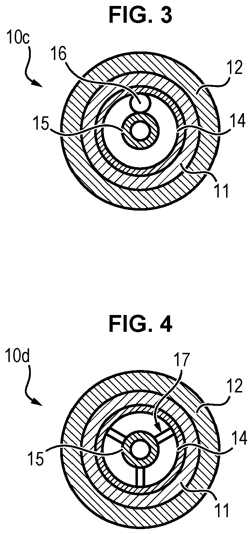

En relation avec la **figure 3**, les moyens d'écartement sont constitués par une cale 16 de section circulaire enroulée en hélice autour de la deuxième conduite 15. Dans ce cas, la cale 16 est maintenue en force entre les première et deuxième conduites 14, 15

En relation avec la **figure 4**, les moyens d'écartement sont formés par des ailettes 17 fixées à la première conduite 14 et/ou la deuxième conduite 15. Selon cette variante à ailettes, la première conduite 14 peut comprendre un profil interne à ailettes. Bien entendu la deuxième conduite 15 peut alternativement comprendre un profil externe à ailettes.

Ces moyens d'écartement étant disposés de manière discrète entre les deux conduites ne nuisent en aucun cas à la souplesse donc à la maniabilité du câble.

En outre, on comprendra que sans ces moyens d'écartement la deuxième conduite à l'intérieur est libre de mouvement de manière à préserver une certaine souplesse du câble.

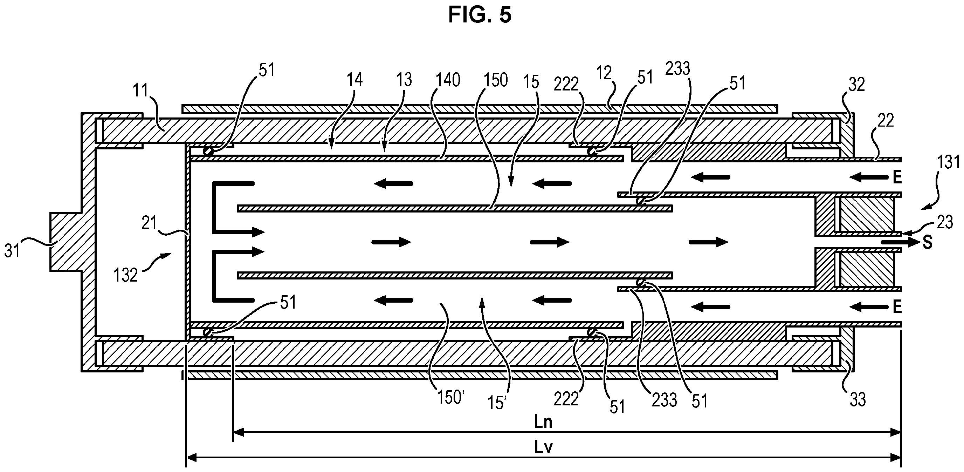

La **figure 5** illustre un dispositif d'alimentation électrique et hydraulique du câble avec la deuxième conduite 15 à l'intérieur de la première conduite 14. Il s'agit en particulier d'une vue de côté et en coupe du câble de la figure 2. Bien entendu les variantes des figures 3 et 4 présentent une structure interne semblable

Le câble comprend un raccord hydraulique terminal 21 disposé à l'extrémité interne du circuit de refroidissement pour permettre d'obturer la première conduite 15, la deuxième conduite 14 se terminant librement en aval du raccord terminal 21 dans le sens retour du fluide au sein de la première conduite.

Grâce au système de pompe, le fluide introduit par la première conduite 14 ressort par le deuxième conduite 15 centrale après être arrivé jusqu'au raccord hydraulique terminal 21.

Également, le câble comprend un raccord hydraulique d'introduction 22 du fluide connecté à l'entrée E du fluide et un raccord hydraulique de sortie 23 du fluide connecté à la sortie S du fluide disposés à l'extrémité externe du circuit de refroidissement, le raccord hydraulique d'introduction 22 du fluide est connecté à la première conduite 14, et le raccord hydraulique de sortie 23 du fluide est connecté à la deuxième conduite 15, les raccords d'introduction et de sortie du fluide étant agencés l'un par rapport à l'autre pour isoler le circuit aller et le circuit de retour à l'extrémité externe du circuit de refroidissement.

Le raccord hydraulique de sortie 23 de fluide est agencé à l'intérieur du raccord hydraulique d'introduction 22 de fluide. De préférence, le raccord hydraulique de sortie 23 est monobloc avec le raccord hydraulique d'introduction 22. En outre, ces raccords 22, 23 sont tels que les premières et deuxièmes conduites sont insérés dans ces raccords hydrauliques. Des joints toriques 51 sont disposés sur la périphérie externe 140, 150 de chacune des conduites au contact entre les extrémités 222, 233 des raccords avec la surface externe des conduites et finalisent la connexion étanche des raccords aux conduites.

Comme on l'aura compris, chaque conduite comprend plusieurs entrées et sorties de fluides permettant le cheminement du fluide dans le circuit de refroidissement à l'intérieur du conducteur 12.

Des connecteurs électriques 31, 32, 33 sont enfin connectés de part et d'autre du conducteur électrique afin de connecter électriquement le câble à des équipements. Un tel agencement avec le raccord hydraulique 21 coté connecteur électrique 31 permet de prévoir un bouclage aller-retour simplifié puisqu'étant intégré dans le câble.. De cette manière l'ensemble du circuit aller-retour est complètement à l'intérieur du câble de sorte qu'il n'est pas nécessaire de prévoir un circuit externe au câble pour gérer le retour du fluide. En effet, l'entrée et la sortie du fluide sont du même côté (coté raccords électriques 32 et 33).

### Dissipation passive

De manière alternative, selon deuxième aspect, la dissipation thermique du câble peut être mise en oeuvre de manière passive.

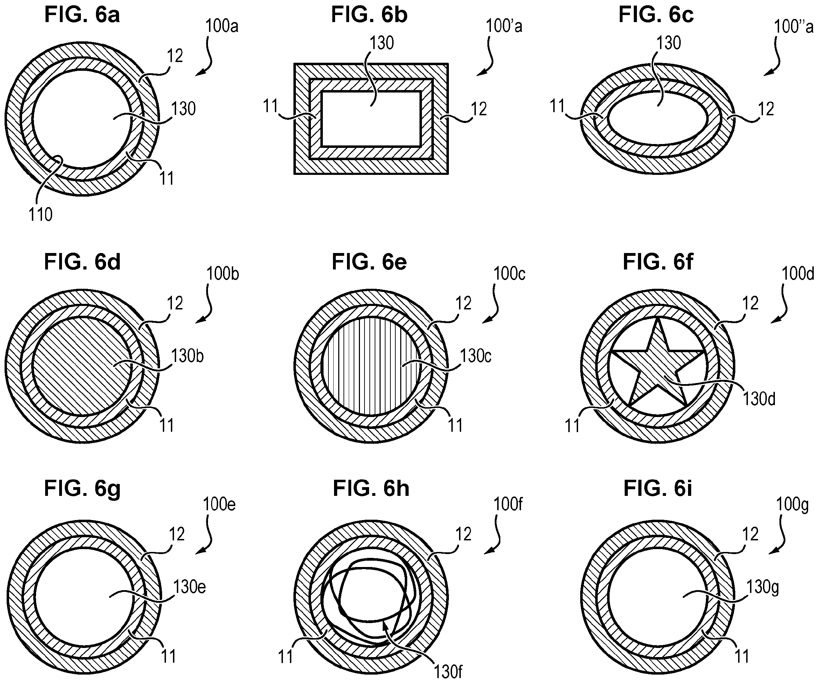

Pour ce faire, comme illustré sur les figures 6a à 6i, le câble comprend un conducteur électrique 11 et une couche isolante 12 entourant le conducteur électrique 11.

Le conducteur électrique 11 présente une section creuse et présente donc en son centre un coeur 130 en contact avec la surface interne 110 du conducteur électrique 11.

Le câble présente avantageusement une section supérieure à celle d'un câble dit de référence ayant un conducteur électrique de référence plein c'est-à-dire ayant une section pleine dite de référence identique à la section du conducteur électrique 11 de section creuse. Le câble de référence est illustré sur la figure 1a.

Le câble 100a de la **figure 6a** présente une section circulaire. Le diamètre du câble 10a selon ce premier mode de réalisation est donc supérieur au diamètre du câble de référence de la figure 1a.

Bien entendu, d'autres formes peuvent être envisagées. La **figure 6b** illustre une variante à ce premier mode de réalisation et illustre un câble 100'a présentant une section rectangulaire à comparer avec le câble de référence à section rectangulaire de la figure 1b.

La **figure 6c** illustre une variante à ce premier mode de réalisation et illustre un câble 100"a présentant une section oblongue à comparer avec le câble de référence à section oblongue de la figure 1c.

Ainsi, on obtient un câble dont la dissipation thermique passive est améliorée puisque la surface d'échange externe du câble est augmentée par rapport à un câble de référence.

Comme on l'aura compris, l'augmentation de la surface d'échange externe du câble est obtenue en augmentant le diamètre de la couche isolante et en ayant un conducteur électrique creux. En effet, la surface utile d'échange thermique par convection naturelle est augmentée sans nécessiter d'augmenter l'épaisseur de la couche isolante et donc de la résistance thermique de conduction.

Par rapport à un câble de référence, la section est augmentée mais en conservant la même quantité de conducteur électrique. Ceci est avantageux dans la mesure où le cout et le poids relatif au conducteur électrique ne sont pas augmentés.

Afin d'assurer la dissipation thermique optimale, le coeur 130 peut être rempli de différentes manières de façon à ce que le conducteur électrique 11 soit maintenu en contact avec la couche isolante 12.

On illustre dans ce qui suit des modes de réalisation particuliers dans le cas d'un câble à section circulaire. Bien entendu, chacun de ces modes de réalisation sont évidemment transposables à des câbles de section rectangulaire ou oblongue ou ovoïde.

Selon un deuxième mode de réalisation illustré sur la **figure 6d**, le câble 100b présente un coeur 130b est rempli d'un matériau expansé, isolant électriquement ou conducteur électriquement ou un mélange de ces matériaux. Le fait d'avoir un coeur conducteur électriquement totalement ou partiellement contribue au transport du courant électrique du câble. En outre, dans le cas d'un matériau expansé conducteur électriquement (ex. Polymère chargé en noir de carbone) cela permet de réduire l'effet joule. Dans le cas d'un matériau conducteur (ex. aluminium) cela permet de réduire le poids tout en augmentant le courant.

Selon un troisième mode de réalisation illustré sur la **figure 6e**, le câble 100c présente un coeur 130c est en matériau non expansé de préférence souple. Le matériau non expansé peut être du polymère chargé en noir de carbone.

Selon un quatrième mode de réalisation illustré sur la **figure 6f**, le câble 100d présente un coeur 130d est en forme de jonc de préférence en étoile.

Selon un cinquième mode de réalisation illustré sur la **figure 6g**, le câble 100e présente un coeur 130e sous la forme d'une conduite creuse en matériau souple.

Selon un sixième mode de réalisation illustré sur la **figure 6h**, le câble 100f présente un coeur 130f est en forme de ressort.

Le câble selon les figures 6d à 6h présente l'avantage d'être souples et flexibles (notamment pour ce qui est du cinquième mode de réalisation).

Selon un mode de réalisation, illustré sur la **figure 6i**, le câble 10g présente un coeur 130g constitué d'air et le conducteur électrique 11 d'une conduite rigide. Ce septième mode de réalisation présente l'avantage d'avoir un conducteur électrique autoporteur. En revanche, et comme on l'aura compris, le câble selon la figure 6i est utilisé dans des environnements où il est possible de préformer les câbles en vue de leur installation

On précise ici que le câble décrit ci-dessus en relation avec les figures 1 à 6h est tel que les conducteurs électriques sont constitués d'un assemblage de torons de brins de cuivre ce qui procure au câble un caractère souple. A l'inverse, comme illustré en figure 6i, un tube ou une conduite de cuivre sont une pièce de cuivre et sont donc rigides.

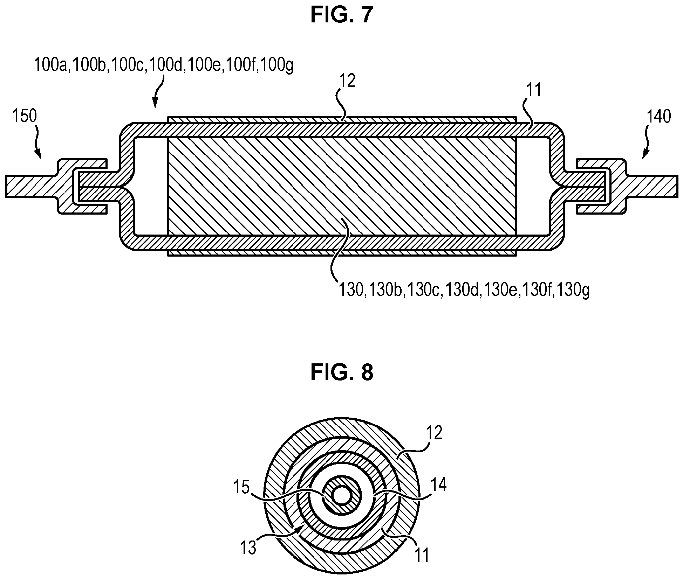

La **figure 7** illustre un dispositif comprenant un câble selon le deuxième aspect et comprenant à ses deux extrémités un connecteur électrique 140, 150. Les connecteurs électriques 140, 150 englobent le conducteur électrique 11 ce dernier étant inséré dans les connecteurs. Au niveau des connecteurs électriques, le conducteur électrique est rassemblé de façon à permettre son insertion dans le connecteur. La couche isolante 12 est disposée au-dessus de l'élément conducteur 11 et ne recouvre pas entièrement la longueur de l'élément conducteur 11 afin de garantir le contact électrique entre le conducteur électrique et les connecteurs.

Ce dispositif de la figure 7 assure l'alimentation électrique entre deux équipements.

### Dissipation active et dissipation passive

La **figure 8** illustre un câble selon un troisième aspect de l'invention qui combine un câble selon le premier aspect et le deuxième aspect.

En effet, le câble selon le premier aspect, peut être tel que le conducteur électrique présente une section creuse dans laquelle est logée le circuit de refroidissement, le câble présentant un diamètre supérieur à celui d'un câble dit de référence ayant un conducteur électrique de référence plein ayant une section pleine dite de référence identique à la section du conducteur électrique de section creuse. Ainsi, on obtient un câble dont la dissipation thermique passive est améliorée puisque la surface d'échange externe du câble est augmentée par rapport à un câble de référence. La dissipation thermique est en outre améliorée grâce à la présence du circuit de refroidissement.

En outre, on comprend dans ce cas, qu'on peut remplir l'espace libre autour du circuit de refroidissement de matériaux ci-dessus décrits.

De manière complémentaire, lorsque les deux types de refroidissement sont disponibles, le câble comprend une unité de contrôle (non représentée) du circuit de refroidissement permettant ou pas de contrôler la circulation du fluide. Dès lors, il est possible d'avoir un fonctionnement avec le refroidissement passif seul, sans le refroidissement actif au moyen du fluide en circulation ou un fonctionnement actif et passif, l'unité de contrôle autorisant la circulation du fluide. Cette unité de contrôle est de préférence positionnée à l'extérieur du câble.

### Application

Le câble selon l'un des aspects ci-dessus décrit est avantageusement utilisé pour la charge rapide d'un véhicule hybride ou électrique. Il est en particulier utilisé à l'intérieur du véhicule au sein d'un dispositif de charge interne.

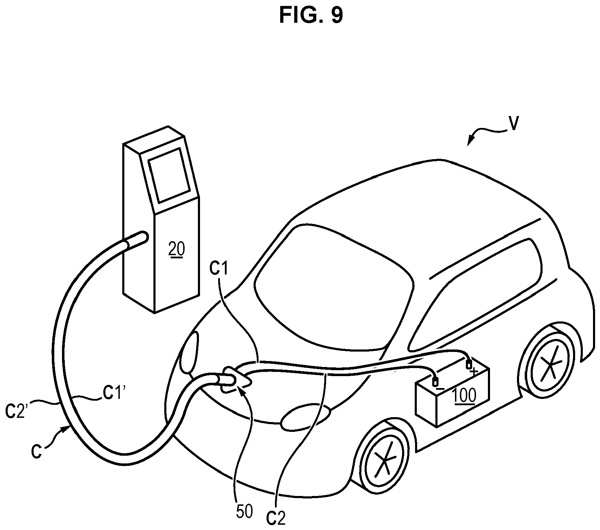

Comme illustré sur la **figure 9**, pour recharger un véhicule électrique V, la batterie 100 électrique du véhicule est raccordée au réseau électrique 20 par un ensemble de charge comprenant deux câbles C1, C2, C1', C2' et un connecteur 50. Les câbles C1, C2, C1', C2' sont conformes à la description du câble ci-dessus décrit.

Le connecteur 50 permet de connecter ou déconnecter la recharge électrique du véhicule.

La charge du véhicule s'effectue au moyen soit d'un courant alternatif soit d'un courant continu, les véhicules étant équipés pour être chargés selon l'un ou l'autre des types de courant.

A l'intérieur du véhicule, deux câbles C1, C2 sont raccordés d'une part aux bornes de la batterie 10 du véhicule (un câble C1 pour la borne positive de la batterie et un câble C2 pour la borne négative de la batterie) et d'autre part au connecteur 50. La partie entre le connecteur 50 et la batterie se trouve donc à l'intérieur du véhicule 1.

A l'extérieur du véhicule, deux câbles C1', C2' sont raccordés d'une part au connecteur 50 et d'autre part au réseau électrique 20. La partie entre le connecteur 50 et le réseau électrique 20 se trouve donc à l'extérieur du véhicule V.

Pour la partie extérieure, les deux câbles C1', C2' sont de préférence agencés au sein d'une même enveloppe pour former un câble d'alimentation 40.

La partie extérieure et la partie intérieure constituent un ensemble de charge, la partie intérieure constitue un dispositif de charge interne.

L'utilisation du câble selon l'invention permet de diminuer le temps de charge du véhicule. En effet, pour diminuer le temps de charge, il est nécessaire d'augmenter le courant ce qui induit un échauffement excessif. Ainsi, en utilisant un câble de référence, comme décrit en introduction, l'échauffement serait trop important. De plus, le câble de l'invention peut se connecter à un connecteur 50 standard.

## Revendications

1. Câble pour véhicule, comprenant un conducteur électrique (11) et une couche isolante (12) entourant le conducteur électrique (11), et un circuit (13, 13') de refroidissement agencé à l'intérieur dudit conducteur électrique (11), ledit circuit de refroidissement (13, 13') comprenant une première conduite (14) et une deuxième conduite (15) disposées à l'intérieur dudit conducteur électrique (11) de manière à former un circuit de refroidissement dans lequel circule un fluide à l'intérieur du conducteur électrique (11), les premières et deuxièmes conduites comprennent des entrées (E) et sorties (S) de fluide, la première conduite (14) formant un circuit aller pour le fluide et la deuxième conduite (15) formant un circuit retour pour le fluide au sein du circuit de refroidissement (13, 13'), la deuxième conduite étant disposée à l'intérieur de la première conduite (14), **caractérisé en ce que** le câble comprend un raccord hydraulique terminal (21) disposé à l'extrémité interne (132) du circuit de refroidissement (13) pour permettre d'obturer la première conduite (14), la deuxième conduite (15) se terminant librement en aval du raccord dans le sens retour du fluide au sein de la deuxième conduite (15).

2. Câble selon la revendication 1, comprenant des moyens d'écartement (16, 17) de la première conduite (14) avec la deuxième conduite (15), lesdits moyens d'écartement (16, 17) étant disposés entre la première conduite (14) et la deuxième conduite (15).

3. Câble selon la revendication 1, dans lequel le moyen d'écartement (16) est constitué par une cale (16) de section circulaire enroulée en hélice autour de la deuxième conduite (15), ladite cale étant maintenue en force entre les première et deuxième conduite (14, 15).

4. Câble selon la revendication 1, dans lequel le moyen d'écartement (17) est formé par des ailettes (17) fixées à la première conduite (14) et/ou la deuxième conduite (15).

5. Câble selon l'une des revendications 1 à 4, comprenant un raccord hydraulique d'introduction (22) du fluide et un raccord hydraulique de sortie (23) du fluide disposés à l'extrémité externe du circuit de refroidissement (13), ledit raccord hydraulique d'introduction (22) du fluide étant connecté à la première conduite, ledit raccord hydraulique de sortie (23) du fluide étant connecté à la deuxième conduite (15), les raccords (22, 23) d'introduction et de sortie du fluide étant agencés l'un par rapport à l'autre pour isoler le circuit aller et le circuit de retour à l'extrémité externe (131) du circuit de refroidissement (13).

6. Câble selon l'une des revendications précédentes dans lequel le conducteur électrique (12) présente une section de forme rectangulaire ou ovoïde ou oblongue.

7. Câble selon la revendication précédente, comprenant des moyens de connexions électriques (31, 32, 33,) connectés de part et d'autre du conducteur électrique (12), lesdits moyens permettant de connecter électriquement ledit câble.

8. Câble selon l'une des revendications précédentes, dans lequel le conducteur électrique (12) présente une section creuse définissant un coeur (13), dans lequel est logé le circuit de refroidissement (13), le câble présentant un diamètre supérieur à celui d'un câble dit de référence ayant un conducteur électrique de référence plein ayant une section pleine dite de référence identique à la section du conducteur électrique de section creuse.

9. Câble selon la revendication 8, comprenant une unité de contrôle configurée pour contrôler la circulation du fluide dans le circuit de refroidissement de manière à avoir un câble dont le refroidissement est passif ou passif et actif en même temps.

10. Câble selon l'une des revendications 8 à 9, dans lequel le coeur est adapté pour permettre un contact entre le conducteur électrique (11) et la couche isolante (12).

11. Câble selon l'une des revendications 8 à 10, dans lequel le coeur (13) est constitué d'un matériau expansé isolant électriquement ou conducteur électriquement ou de mélange de ces matériaux.

12. Câble selon l'une des revendications 8 à 11, dans lequel le coeur (13d, 13e, 13f) présente une forme choisie parmi le groupe suivant : en forme de tube, en forme de jonc, en forme de ressort.

13. Dispositif d'alimentation électrique pour véhicule électrique ou hybride comprenant un câble selon l'une des revendications précédentes, ledit câble est destiné à être connecté aux bornes d'une batterie (100) d'un véhicule (V) hybride ou électrique d'une part et au connecteur (50) d'autre part.

## Patentansprüche

1. Fahrzeugkabel, das einen elektrischen Leiter (11) und eine Isolierschicht (12) umfasst, die den elektrischen Leiter (11) umgibt, und
einen Kühlkreislauf (13, 13'), der sich innerhalb des elektrischen Leiters (11) befindet, wobei der Kühlkreislauf (13, 13') eine erste Leitung (14) und eine zweite Leitung (15) umfasst, die derart innerhalb des elektrischen Leiters (11) angeordnet ist, um einen Kühlkreislauf zu bilden, in dem ein Fluid innerhalb des elektrischen Leiters (11) zirkuliert, wobei die erste und die zweite Leitung Fluideinlässe (E) und -auslässe (S) umfassen, wobei die erste Leitung (14) einen Durchgangskreislauf für das Fluid bildet und das zweite Leitung (15) einen Rücklaufkreislauf für das Fluid inmitten des Kühlkreislaufs (13, 13') bildet, wobei die zweite Leitung innerhalb der ersten Leitung (14) angeordnet ist, **dadurch gekennzeichnet, dass** das Kabel einen hydraulischen Endanschluss (21) umfasst, der am inneren Ende (132) des Kühlkreislaufs (13) angeordnet ist, um das Verschließen der ersten Leitung (14) zu ermöglichen, wobei die zweite Leitung (15) hinter dem Anschluss in der Rücklaufrichtung des Fluids inmitten der zweiten Leitung (15) frei endet.

2. Kabel nach Anspruch 1, das Abstandhaltemittel (16, 17) für die erste Leitung (14) von der zweiten Leitung (15) umfasst, wobei die Abstandhaltemittel (16, 17) zwischen der ersten Leitung (14) und der zweiten Leitung (15) angeordnet sind.

3. Kabel nach Anspruch 1, wobei das Abstandhaltemittel (16) aus einem Keil (16) mit kreisförmigem Querschnitt besteht, der spiralförmig um die zweite Leitung (15) gewickelt ist, wobei der Keil zwischen der ersten und der zweiten Leitung (14, 15) festgehalten wird.

4. Kabel nach Anspruch 1, wobei das Abstandhaltemittel (17) durch Stege (17) gebildet wird, die an der ersten Leitung (14) und/oder der zweiten Leitung (15) befestigt sind.

5. Kabel nach einem der Ansprüche 1 bis 4, das einen hydraulischen Fluideingangsanschluss (22) und einen hydraulischen Fluidausgangsanschluss (23) umfasst, die am äußeren Ende des Kühlkreislaufs (13) angeordnet sind, wobei der hydraulische Fluideingangsanschluss (22) mit der ersten Leitung verbunden ist, wobei der hydraulische Fluidausgangsanschluss (23) mit der zweiten Leitung (15) verbunden ist, wobei der Fluideingangs- und der Fluidausgangsanschluss (22, 23) derart im Verhältnis zueinander angeordnet sind, um den Durchgangskreislauf und den Rücklaufkreislauf am äußeren Ende (131) Kühlkreislaufs (13) zu isolieren.

6. Kabel nach einem der vorhergehenden Ansprüche, wobei der elektrische Leiter (12) einen rechteckigen oder ovalen oder länglichen Querschnitt aufweist.

7. Kabel nach dem vorhergehenden Anspruch, das elektrische Verbindungsmittel (31, 32, 33) umfasst, die auf beiden Seiten des elektrischen Leiters (12) angeschlossen sind, wobei die Mittel es ermöglichen, das Kabel elektrisch anzuschließen.

8. Kabel nach einem der vorhergehenden Ansprüche, wobei der elektrische Leiter (12) einen hohlen Abschnitt aufweist, der einen Kern (13) definiert, in dem der Kühlkreislauf (13) untergebracht ist, wobei das Kabel einen Durchmesser aufweist, der größer ist als der eines sogenannten Referenzkabels mit einem vollen elektrischen Referenzleiter, der einen sogenannten vollen Referenzquerschnitt aufweist, der mit dem Querschnitt des elektrischen Leiters des hohlen Abschnitts identisch ist.

9. Kabel nach Anspruch 8, das eine Steuereinheit umfasst, die dazu konfiguriert ist, die Zirkulation des Fluids im Kühlkreislauf derart zu steuern, um ein Kabel zu erhalten, dessen Kühlung gleichzeitig passiv oder passiv und aktiv ist.

10. Kabel nach einem der Ansprüche 8 bis 9, wobei der Kern dazu ausgelegt ist, einen Kontakt zwischen dem elektrischen Leiter (11) und der Isolierschicht (12) zu ermöglichen.

11. Kabel nach einem der Ansprüche 8 bis 10, wobei der Kern (13) aus einem elektrisch isolierenden oder elektrisch leitenden expandierten Material oder einer Mischung dieser Materialien besteht.

12. Kabel nach einem der Ansprüche 8 bis 11, wobei der Kern (13d, 13e, 13f) eine Form aufweist, die aus der folgenden Gruppe ausgewählt wird: Rohrförmig, ringförmig, federförmig.

13. Stromversorgungsvorrichtung für ein Elektro- oder Hybridfahrzeug, die ein Kabel nach einem der vorhergehenden Ansprüche umfasst, wobei das Kabel dazu bestimmt ist, mit den Anschlüssen einer Batterie (100) eines Hybrid- oder Elektrofahrzeugs (V) einerseits und mit dem Stecker (50) andererseits verbunden zu werden.

## Claims

1. A cable for a vehicle, comprising an electrical conductor (11) and an insulating layer (12) surrounding the electrical conductor (11), and a cooling circuit (13, 13') arranged inside said electrical conductor (11), said cooling circuit (13, 13') comprising a first conduit (14) and a second conduit (15) arranged inside said electrical conductor (11) so as to form a cooling circuit in which a fluid circulates inside the electrical conductor (11), the first and second conduits comprise fluid inlets (E) and outlets (S), the first conduit (14) forming an outward circuit for the fluid and the second conduit (15) forming a return circuit for the fluid within the cooling circuit (13, 13'), the second conduit being arranged inside the first conduit (14), **characterized in that** the cable comprises a terminal hydraulic connector (21) disposed at the inner end (132) of the cooling circuit (13) to enable the first conduit (14) to be closed off, the second conduit (15) terminating freely downstream of the connector in the return direction of the fluid within the second conduit (15).

2. The cable as claimed in claim 1, comprising means (16, 17) for spacing the first conduit (14) from the second conduit (15), said spacing means (16, 17) being disposed between the first conduit (14) and the second conduit (15).

3. The cable as claimed in claim 1, wherein the spacing means (16) is constituted by a wedge (16) of circular cross-section wound helically around the second duct (15), said wedge being held in force between the first and second ducts (14, 15).

4. The cable as claimed in claim 1, wherein the spacing means (17) is formed by fins (17) attached to the first conduit (14) and/or the second conduit (15).

5. The cable as claimed in claims 1 to 4, comprising a hydraulic fluid introduction connection (22) and a hydraulic fluid outlet connection (23) arranged at the outer end of the cooling circuit (13), said hydraulic fluid introduction connection (22) being connected to the first conduit, said hydraulic fluid outlet connector (23) being connected to the second conduit (15), the fluid inlet and outlet connectors (22, 23) being arranged with respect to each other to isolate the forward circuit and the return circuit at the outer end (131) of the cooling circuit (13).

6. The cable as claimed in claims 1 to 5, wherein the electrical conductor (12) has a rectangular or ovoid or oblong cross-section.

7. The cable as claimed in claim 6, comprising electrical connection means (31, 32, 33) connected on either side of the electrical conductor (12), said means enabling said cable to be electrically connected.

8. The cable as claimed in claim 1 to 7, wherein the electrical conductor (12) has a hollow section defining a core (13), in which the cooling circuit (13) is housed, the cable having a diameter greater than that of a so-called reference cable having a solid reference electrical conductor with a solid reference section identical to the section of the hollow section electrical conductor.

9. The cable as claimed in claim 8, comprising a control unit configured to control the flow of fluid in the cooling circuit so as to have a cable whose cooling is passive or passive and active at the same time.

10. The cable as claimed in claims 8 to 9, wherein the core is adapted to allow contact between the electrical conductor (11) and the insulating layer (12).

11. The cable as claimed in claims 8 to 10, wherein the core (13) is made of an electrically insulating or electrically conductive expanded material or a mixture of these materials.

12. The cable as claimed in claims 8 to 11, wherein the core (13d, 13e, 13f) has a shape selected from the following group: tube-shaped, rod-shaped, spring-shaped.

13. An electrical power supply device for an electric or hybrid vehicle comprising a cable as claimed in claims 1 to 12, said cable being intended to be connected to the terminals of a battery (100) of a hybrid or electric vehicle (V) on the one hand and to the connector (50) on the other hand.
